(19) **Europäisches Patentamt / European Patent Office / Office européen des brevets**

(11) **EP 4 637 013 A1**

(12) **EUROPEAN PATENT APPLICATION**
published in accordance with Art. 153(4) EPC

(43) Date of publication:
**22.10.2025   Bulletin 2025/43**

(21) Application number: **23903050.5**

(22) Date of filing: **08.09.2023**

(51) International Patent Classification (IPC):
**H02M 3/155** (2006.01)

(52) Cooperative Patent Classification (CPC):
**H02M 3/155**

(86) International application number:
**PCT/JP2023/032833**

(87) International publication number:
**WO 2024/127748 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.12.2022   JP 2022198196**

(71) Applicant: **Panasonic Intellectual Property Management Co., Ltd.**
**Kadoma-shi, Osaka 571-0057 (JP)**

(72) Inventors:
• **SHIBUSAWA, Shingo**
  **Kadoma-shi, Osaka 571-0057 (JP)**
• **SHIRAKATA, Naganori**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **CONTROL CIRCUIT, POWER CONVERSION DEVICE, CONTROL METHOD, AND PROGRAM**

(57)     A control circuit (2) is a circuit for controlling a converter (1) that includes at least two FETs (111, 114), and includes: a duty setter (29) that sets a duty cycle for each of FETs (111, 114) by selecting an ON-OFF combination of the FETs (111, 114) from a first combination in which a current flowing through an inductor (12) changes with a first slope, and a second combination in which the current flowing through the inductor (12) changes with a second slope that is more gradual than the first slope, so that the current flowing through the inductor (12) becomes a predetermined current value; and an outputter (30) that outputs signals corresponding to the set duty cycles.

FIG. 1

**Description**

[Technical Field]

The present disclosure relates to a control circuit, a power conversion device equipped with a control circuit, a control method of a control circuit, and a program.

[Background Art]

Patent Literature (PTL) 1 describes a technique in which an inductor current at each of two time points is measured, a time point at which the inductor current reaches a predetermined current value is predicted based on the time interval between the two time points and the current difference between the inductor currents at the two time points, and an ON period or an OFF period (i.e., duty cycle) for a switching element is set so that the ON or OFF of the switching element is inverted at the predicted time point.

In the technique described in PTL 1, because the time from the prediction of the time point at which the inductor current reaches the predetermined current value to the arrival of the time point at which the inductor current reaches the predetermined current value is indefinite, the processing time for the prediction and setting is required to be sufficiently short compared to the ripple period. In other words, the ripple period (and consequently, the ripple width) needs to be increased relative to the processing time, and this may impair the accuracy of current control.

PTL 2 describes a technique in which, based on the inductor current, input/output voltage, and duty cycle at the present time, a duty cycle after one step is set so that the inductor current after two steps becomes a predetermined current value. In this case, there is sufficient processing time to calculate and set the duty cycle, and current control can be performed with high accuracy.

[Citation List]

[Patent Literature]

[PTL 1] Japanese Unexamined Patent Application Publication No. 2019-75855
[PTL 2] U.S. Patent No. 7148669

[Summary of Invention]

[Technical Problem]

When a large instantaneous change in current is required, such as when the output voltage drops, current control needs to be performed at high speed. However, in the technique described in PTL 2, the slope of the current during the current change has only one pattern for current increase and one pattern for current decrease, and it may not be possible to perform current control at high speed.

Therefore, the present disclosure provides a control circuit and the like that can perform current control at high speed and with high accuracy.

[Solution to Problem]

A control circuit according to one aspect of the present disclosure is a control circuit for controlling a circuit that includes at least two switching elements, the control circuit including: a duty setter that sets a duty cycle for each of the at least two switching elements by selecting an ON-OFF combination of the at least two switching elements from a first combination in which a current flowing in the circuit changes with a first slope, and a second combination in which the current flowing in the circuit changes with a second slope that is more gradual than the first slope, to cause the current flowing in the circuit to become a predetermined current value; and an outputter that outputs signals corresponding to the duty cycles that have been set.

A power conversion device according to one aspect of the present disclosure includes the control circuit and the circuit.

A control method according to one aspect of the present disclosure is a control method executed by a control circuit that controls a circuit including at least two switching elements, the control method including: setting a duty cycle for each of the at least two switching elements by selecting an ON-OFF combination of the at least two switching elements from a first combination in which a current flowing in the circuit changes with a first slope, and a second combination in which the current flowing in the circuit changes with a second slope that is more gradual than the first slope, to cause the current flowing in the circuit to become a predetermined current value; and outputting signals corresponding to the duty cycles that have been set.

A program according to one aspect of the present disclosure is a program for causing a computer to execute the above control method.

Note that the above comprehensive or specific aspect may be implemented by a system, method, integrated circuit, computer program, or recording medium such as a computer-readable compact disc read-only memory (CD-ROM), or by any combination of the system, method, integrated circuit, computer program, and recording medium.

[Advantageous Effects of Invention]

According to one aspect of the present disclosure, current control can be performed at high speed and with high accuracy.

[Brief Description of Drawings]

[FIG. 1]

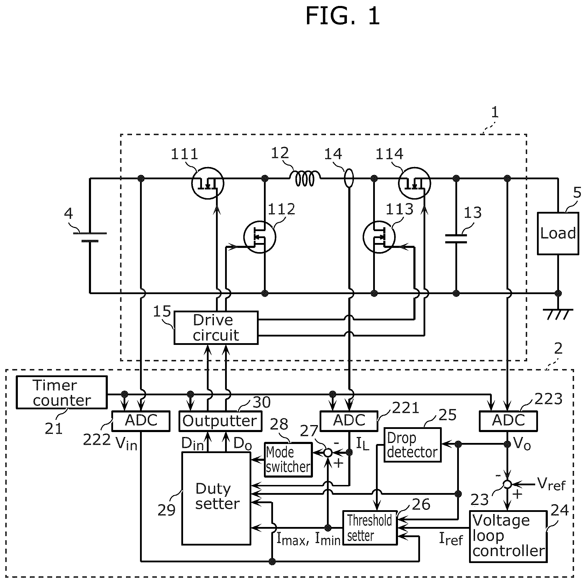

FIG. 1 is a configuration diagram illustrating an example of a control circuit according to an embodiment and a circuit controlled by the control circuit.
[FIG. 2]

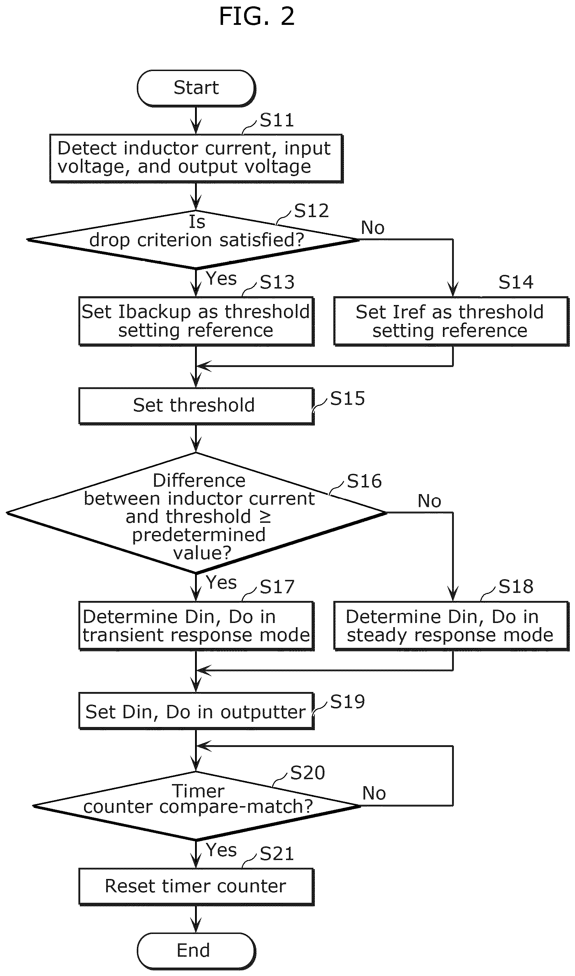

FIG. 2 is a flowchart illustrating an example of the operation of the control circuit according to the embodiment.
[FIG. 3]

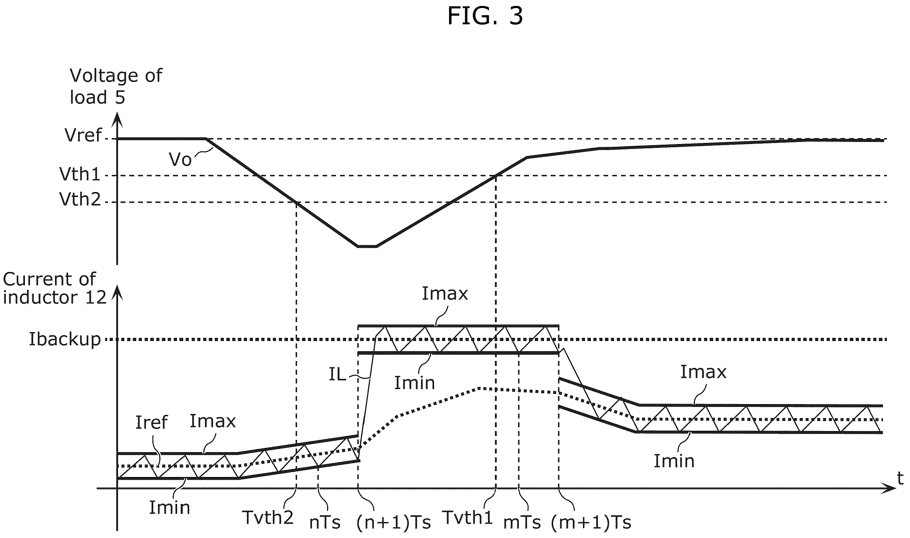

FIG. 3 is a diagram for explaining an operation of a threshold setter according to the embodiment.
[FIG. 4]

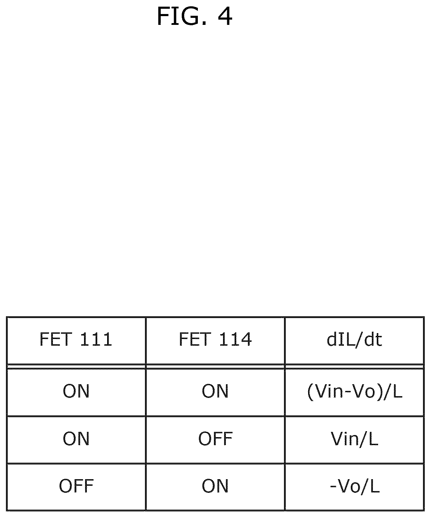

FIG. 4 is a diagram showing the relationship between an ON-OFF combination of field-effect transistors (FETs) and a current change slope.
[FIG. 5]

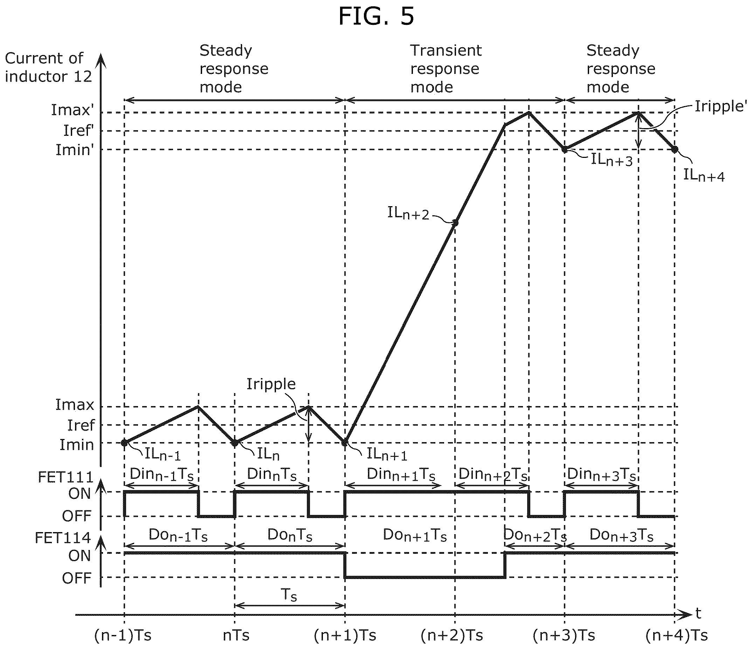

FIG. 5 is a timing chart illustrating an example of changes in a current flowing through an inductor in accordance with the ON and OFF of each FET.
[FIG. 6]

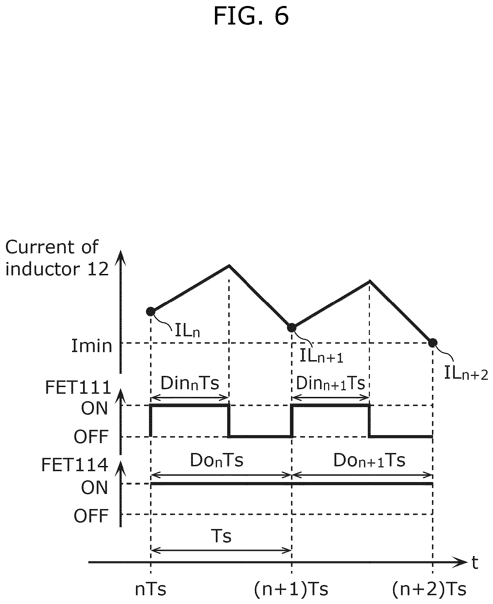

FIG. 6 is a timing chart illustrating a first example of a duty cycle setting method for pulse-width modulation (PWM) signals in the embodiment.
[FIG. 7]

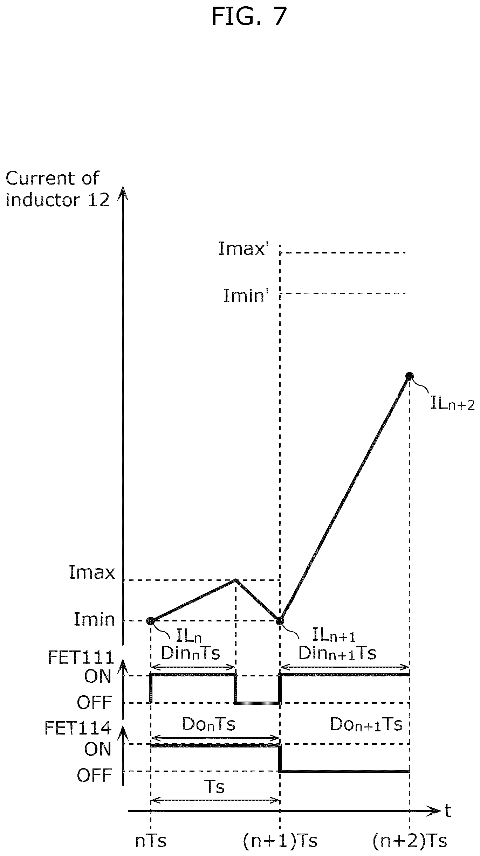

FIG. 7 is a timing chart illustrating a second example of the duty cycle setting method for the PWM signals in the embodiment.
[FIG. 8]

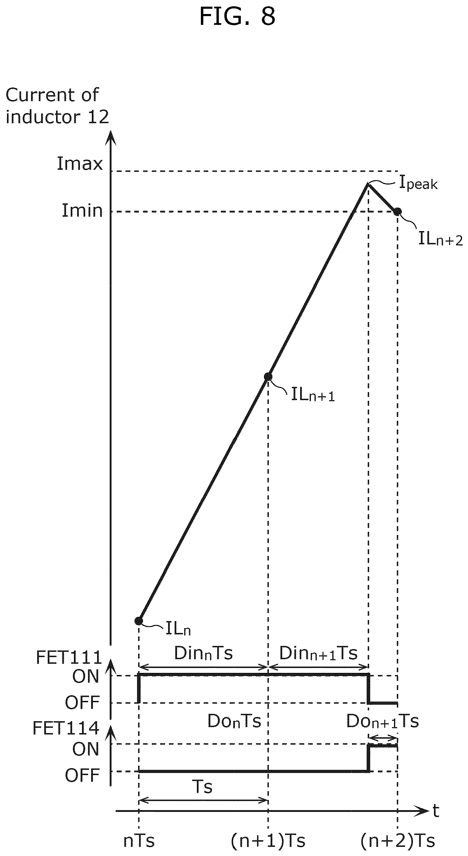

FIG. 8 is a timing chart illustrating a third example of the duty cycle setting method for the PWM signals in the embodiment.
[FIG. 9]

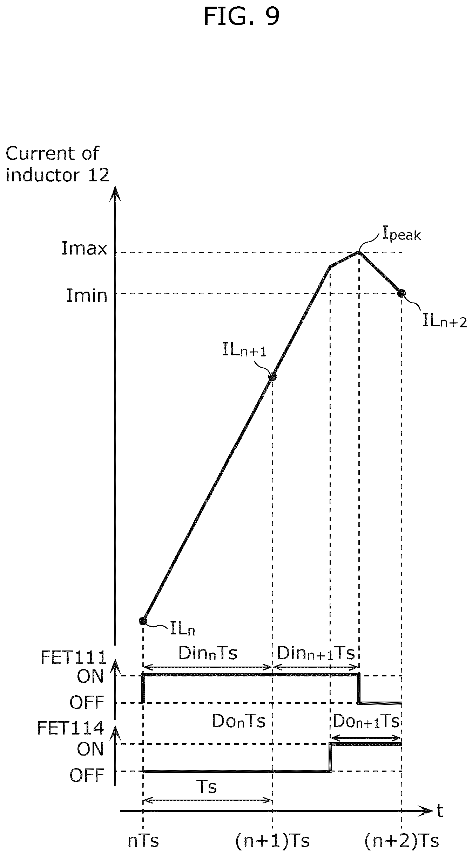

FIG. 9 is a timing chart illustrating a fourth example of the duty cycle setting method for the PWM signals in the embodiment.

[Description of Embodiment]

Hereinafter, embodiments will be specifically described with reference to the drawings.
Note that all of the embodiments described below show comprehensive or specific examples. The numerical values, shapes, materials, components, arrangement positions and connection forms of components, steps, order of steps, and the like shown in the following embodiments are examples and are not intended to limit the present disclosure.

(Embodiment)

A control circuit according to an embodiment will be described with reference to FIGS. 1 to 9.
FIG. 1 is a configuration diagram illustrating an example of control circuit 2 according to the embodiment and a circuit controlled by control circuit 2. Control circuit 2 is a circuit that controls a circuit including at least two switching elements. The circuit including at least two switching elements is, for example, a circuit provided in a power conversion device and is specifically a DC-to-DC converter (hereinafter referred to as converter 1). Converter 1 boosts or lowers the voltage of power supply 4 by switching and supplies the voltage to load 5. Control circuit 2 provides converter 1 with a control signal for switching at least two switching elements.

As at least two switching elements, converter 1 includes, for example, four switching elements made up of field-effect transistors (hereinafter referred to simply as FETs) 111 to 114. FETs 111 to 114 are, for example, N-channel metal-oxide-semiconductor field-effect transistors (MOSFETs). Note that FETs 111 to 114 may be P-channel MOSFETs. The switching elements are not limited to FETs but may be bipolar transistors or the like. Note that the number of switching elements provided in converter 1 is not limited to four and is not particularly limited as long as the number is two or more. Converter 1 includes inductor 12, smoothing capacitor 13, current sensor 14, and drive circuit 15.

FETs 111, 112 are connected to power supply 4 side as seen from inductor 12, and FETs 113, 114 are connected to load 5 side as seen from inductor 12. FET 111, inductor 12, and FET 114 are connected in series on a path between power supply 4 and load 5. Specifically, power supply 4 is connected to the drain of FET 111, the source of FET 111 is connected to one end of inductor 12, the other end of inductor 12 is connected to the drain of FET 114, and the source of FET 114 is connected to load 5. The drain of FET 112 is connected to a node on a path between the source of FET 111 and one end of inductor 12, and the source of FET 112 is connected to ground (the reference potential of converter 1). The drain of FET 113 is connected to a node on a path between the other end of inductor 12 and the drain of FET 114, and the other end of FET 113 is connected to ground (the reference potential of converter 1).

One end of smoothing capacitor 13 is connected to a node on a path between the source of FET 114 and load 5, and the other end of smoothing capacitor 13 is connected to ground (the reference potential of converter 1).

Current sensor 14 is a sensor that detects a current flowing in the circuit including at least two switching elements. Specifically, current sensor 14 detects a current flowing through inductor 12, which is used for power conversion, as the current flowing in the circuit. For example, current sensor 14 is connected in series with inductor 12 on the path between power supply 4 and load 5, and converts the current flowing through inductor 12 into a signal that can be detected by control circuit 2, such as a voltage. Current sensor 14 is implemented by, for example, a current transformer or a shunt resistor.

Drive circuit 15 includes a charge pump (not illustrated) and drives FETs 111 to 114 to ON or OFF. Drive circuit 15 provides FET 111 with one of drive signals obtained by level-converting two pulse-width modulation (PWM) signals provided from control circuit 2, and provides FET 114 with the other drive signal. Drive circuit 15 provides FET 112 with a drive signal obtained by inverting the ON and OFF of the drive signal provided to FET 111, and provides FET 113 with a drive signal obtained by inverting the ON and OFF of the drive signal provided to FET 114. Thus, FET 112 is OFF when FET 111 is ON, FET 112 is ON when FET 111 is OFF, FET 113 is OFF when FET 114 is ON, and FET 113 is ON when FET 114 is OFF.

Control circuit 2 is implemented by a digital processor, such as a microcontroller, and operates as an interface to converter 1. Control circuit 2 includes analog-to-digital (A/D) converter 221 that detects a signal output from current sensor 14, A/D converter 222 that detects the voltage of power supply 4, A/D converter 223 that detects the voltage of load 5, and outputter 30 that outputs two PWM signals to drive circuit 15. These interfaces are periodically driven based on the count value of timer counter 21, which is reset at regular intervals of the switching period (period Ts) of the switching element included in converter 1.

Control circuit 2 includes a voltage loop control function and a current loop control function as internal software. The voltage loop control function is implemented by subtractor 23, voltage loop controller 24, and drop detector 25. The current loop control function is implemented by threshold setter 26, subtractor 27, mode switcher 28, and duty setter 29.

Subtractor 23 calculates the difference between voltage value Vo of load 5 detected by A/D converter 223 and target internal voltage value Vref, and outputs the difference to voltage loop controller 24 as voltage deviation Vref-Vo.

Voltage loop controller 24 calculates, based on voltage deviation Vref-Vo, target current value Iref of the current flowing through inductor 12 and outputs target current value Iref to threshold setter 26.

Drop detector 25 detects a supply voltage drop from converter 1 to load 5. Specifically, drop detector 25 determines whether the voltage to be supplied to load 5 has dropped, based on voltage value Vo of load 5 detected by A/D converter 223. Drop detector 25 outputs the determination result to threshold setter 26 as a drop detection signal.

Threshold setter 26 sets two current thresholds. A predetermined current value, which will be described later, is one of the two current thresholds set by threshold setter 26. For example, threshold setter 26 sets the two current thresholds using, as a reference, target current value Iref of the current flowing through inductor 12 that has been determined based on the supply voltage to load 5. Specifically, threshold setter 26 calculates two current thresholds Imax and Imin based on voltage detection value Vin of power supply 4 detected by A/D converter 222, voltage detection value Vo of load 5 detected by A/D converter 223, target current value Iref output by voltage loop controller 24, and the drop detection signal detected by drop detector 25. As described in detail later, when drop detector 25 detects a drop, threshold setter 26 sets two current thresholds Imax and Imin using, as a reference, a voltage recovery current value prepared in advance instead of the target current value.

Subtractor 27 calculates the difference between current detection value IL of inductor 12 detected by A/D converter 221 and current threshold Imax or Imin set by threshold setter 26, and outputs the difference as current deviation Imax-IL or Imin-IL to mode switcher 28.

Mode switcher 28 switches between a transient response mode and a steady response mode based on the current flowing through inductor 12 and a predetermined current value, which is one of two current thresholds Imax and Imin. Specifically, mode switcher 28 selects either the steady response mode or the transient response mode based on current deviation Imax-IL or Imin-IL, and outputs the selected mode to duty setter 29 as an operation mode signal. Details of the transient response mode and the steady response mode will be described later.

Duty setter 29 sets an ON-time ratio (duty cycle: also referred to as duty value) of each of at least two switching elements provided in converter 1. For example, duty setter 29 sets duty cycles for FETs 111, 114. Specifically, duty setter 29 outputs input-side duty value Din and output-side duty value Do to outputter 30 based on current detection value IL of inductor 12 detected by A/D converter 221, voltage detection value Vin of power supply 4 detected by A/D converter 222, voltage detection value Vo of load 5 detected by A/D converter 223, current thresholds Imax and Imin set by threshold setter 26, and the operation mode signal output by mode switcher 28. Input-side duty value Din corresponds to the duty cycle for FET 111, and output-side duty value Do corresponds to the duty cycle for FET 114. As described in detail later, duty setter 29 sets the respective duty cycles for FETs 111, 114 by selecting the ON-OFF combination of FETs 111, 114 from a first combination in which the current flowing through inductor 12 changes with a first slope, and a second combination in which the current flowing through inductor 12 changes with a second slope that is more gradual than the first slope, so that the current flowing through inductor 12 becomes a predetermined current value.

Outputter 30 generates two PWM signals to be transmitted to drive circuit 15 based on input-side duty value Din and output-side duty value Do output by duty setter 29. The two PWM signals include an input-side PWM signal corresponding to the drive signal provided to FET 111, and an output-side PWM signal corresponding to the drive signal provided to FET 114. A period for the input-side PWM signal and the output-side PWM signal is determined by timer counter 21 to be period Ts. The PWM signal duty cycles for the input-side PWM signal and the output-side PWM signal within one period are determined by input-side duty value Din and output-side duty value Do, respectively. Note that the drive signal provided to FET 112 is a drive signal obtained by inverting the ON and OFF of the drive signal provided to FET 111, and the drive signal provided to FET 113 is a drive signal obtained by inverting the ON and OFF of the drive signal provided to FET 114.

The operation of control circuit 2 will be described with reference to FIG. 2.

FIG. 2 is a flowchart illustrating an example of the operation of control circuit 2 according to the embodiment. The processing illustrated in FIG. 2 is executed every PWM signal period Ts determined by timer counter 21.

When the processing in FIG. 2 is started, A/D converters 221, 222, 223 of control circuit 2 detect current value IL of inductor 12, voltage value Vin of power supply 4, and voltage value Vo of load 5, respectively (S11).

Next, based on voltage value Vo of load 5, drop detector 25 determines whether voltage value Vo satisfies a drop criterion (S12). When voltage value Vo satisfies the drop criterion (Yes in S12), drop detector 25 outputs a drop detection signal, and threshold setter 26 sets target current value Ibackup for drop recovery as a threshold setting reference (S13). Target current value Ibackup for drop recovery is an example of a voltage recovery current value. When voltage value Vo does not satisfy the drop criterion (No in S12), drop detector 25 does not output a drop detection signal, and threshold setter 26 sets target current value Iref output by voltage loop controller 24 as the threshold setting reference (S14).

Subsequently, based on target current value Ibackup for drop recovery or target current value Iref, which is the threshold setting reference, threshold setter 26 sets current thresholds Imax and Imin above and below target current value Ibackup for drop recovery or target current value Iref, and outputs the set thresholds to subtractor 27 and duty setter 29 (S15).

Next, mode switcher 28 determines whether the absolute value of current deviation Imin-IL, calculated by subtractor 27, between current value IL of inductor 12 detected by A/D converter 221 and the current threshold (e.g., current threshold Imin) output by threshold setter 26 is greater than or equal to a predetermined value (S16). When the absolute value is greater than or equal to the predetermined value (Yes in S16), mode switcher 28 outputs the operation mode signal as the transient response mode to duty setter 29, and duty setter 29 calculates input-side duty value Din and output-side duty value Do in the transient response mode (S17). When the absolute value is less than the predetermined value (No in S16), mode switcher 28 outputs the operation mode signal as the steady response mode to duty setter 29, and duty setter 29 calculates input-side duty value Din and output-side duty value Do in the steady response mode (S18).

Next, duty setter 29 sets calculated input-side duty value Din and output-side duty value Do in outputter 30 as the duty values for the next period (S19). Outputter 30 outputs PWM signals for the next period based on these duty values.

Next, using timer counter 21, control circuit 2 waits for the detection by A/D converters 221 to 223 and the subsequent control operation until the next operation start timing (S20). When the count value of timer counter 21 does not compare-match the value corresponding to period Ts (No in S20), control circuit 2 continues to wait. When a compare-match occurs (Yes in S20), control circuit 2 resets the count value of timer counter 21 (S21) and terminates the processing in FIG. 2 This completes the processing for one period of the PWM signals output from control circuit 2.

Hereinafter, the operation of threshold setter 26 will be described with reference to timing charts in FIG. 3, illustrating the relationship between the voltage of load 5 and current thresholds Imax and Imin output by threshold setter

**EP 4 637 013 A1**

26, and using as an example a case where the voltage to be supplied to load 5 drops for some reason.

FIG. 3 is a diagram for explaining the operation of threshold setter 26 according to the embodiment.

Two timing charts illustrated in FIG. 3 have time axis t as the horizontal axis, and illustrate the voltage of load 5 on the upper side and the current of inductor 12 on the lower side. The timing chart of the voltage of load 5 shows voltage value Vo of load 5, voltage target value Vref, recovery criterion Vth1, and drop criterion Vth2. In the case illustrated in FIG. 3, for example, voltage target value Vref, recovery criterion Vth1, and drop criterion Vth2 are fixed values held inside control circuit 2. However, the relationship Vref > Vth1 > Vth2 is assumed. The timing chart of the current of inductor 12 shows current value IL of inductor 12, target current value Iref output by voltage loop controller 24, current thresholds Imax and Imin output by threshold setter 26, and target current value Ibackup for drop recovery. In the case illustrated in FIG. 3, target current value Ibackup for drop recovery is a fixed value held inside threshold setter 26, for example.

In the case illustrated in FIG. 3, voltage value Vo of load 5 falls below drop criterion Vth2 at time t = Tvth2. Voltage value Vo of load 5 exceeds recovery criterion Vth1 at time t = Tvth1.

Drop detector 25 detects the voltage drop of load 5 at current detection timing t = nTs (n is an integer) by A/D converter 223 immediately after time t = Tvth2, and outputs a drop detection signal to threshold setter 26. Further, drop detector 25 detects the voltage recovery of load 5 at current detection timing t = mTs (m is an integer greater than n) by A/D converter 223 immediately after time t = Tvth1, and cancels the drop detection signal output to threshold setter 26.

During normal operation when no drop detection signal is output, threshold setter 26 sets respective current thresholds Imax and Imin above and below target current value Iref output by voltage loop controller 24. When the drop detection signal is output at time t = nTs, threshold setter 26 replaces target current value Iref with target current value Ibackup for drop recovery as the setting reference for thresholds Imax and Imin after time t = (n+1)Ts. When the drop detection signal is canceled at time t = mTs, threshold setter 26 replaces target current value Iref with target current value Ibackup for drop recovery as the setting reference for thresholds Imax and Imin after time t = (m+1)Ts.

If, for example, voltage loop controller 24 is designed with an emphasis on stability, a change in target current value Iref immediately after the voltage drop may be insufficient or excessively gradual. Therefore, for faster recovery from the voltage drop, target current value Ibackup for drop recovery is desirably set to a value sufficiently greater than target current value Iref.

Duty setter 29 controls the current flowing through inductor 12 by the ON-OFF combination of FETs 111, 114. Here, the ON-OFF combination of FETs 111, 114 will be described with reference to FIG. 4.

FIG. 4 is a diagram sowing the relationship between the ON-OFF combination of FETs 111, 114 and the slope of the current change.

The correspondence between the increase/decrease rate $dIL/dt$ of current IL of inductor 12 and the ON-OFF combination of FETs 111, 114 is as shown in the table in FIG. 4. When FET 111 is ON and FET 114 is ON, $dIL/dt = (Vin - Vo)/L$. When FET 111 is ON and FET 114 is OFF, $dIL/dt = Vin/L$. When FET 111 is OFF and FET 114 is ON, $dIL/dt = -Vo/L$. Note that L is the inductance of inductor 12.

The combination of FET 111 being ON and FET 114 being OFF is an example of the first combination in which the current flowing through inductor 12 changes with the first slope. The combination of FET 111 being ON and FET 114 being ON is an example of the second combination in which the current flowing through inductor 12 changes with the second slope that is more gradual than the first slope. The combination of FET 111 being OFF and FET 114 being ON is an example of a third combination in which the current flowing through inductor 12 changes with a third slope having positive and negative directions opposite to those of the first slope and the second slope. Duty setter 29 sets duty cycles for FETs 111, 114 (in other words, duty cycles for the respective PWM signals provided to FETs 111, 114) by selecting the ON-OFF combination of FETs 111, 114 from the first combination and the second combination. In the following, an example where the first slope and the second slope are positive slopes and the third slope is a negative slope will be described.

Hereinafter, the relationship between the duty cycle for the PWM signal provided to each of FETs 111, 114 and the current of inductor 12 in current loop control will be described with reference to FIGS. 5 to 9. Three timing charts illustrated in each of FIGS. 5 to 9 have time axis t as the horizontal axis and schematically illustrate, from top to bottom, the current of inductor 12, the PWM signal provided to FET 111, and the PWM signal provided to FET 114 in order from the top.

FIG. 5 includes the timing charts illustrating an example of changes in the current flowing through inductor 12 in accordance with the ON and OFF of FETs 111, 114.

In FIG. 5, the current detection value of inductor 12 detected by A/D converter 221 at time t = (n-1)Ts is denoted as $IL_{n-1}$, and the input-side duty value and the output-side duty value set by duty setter 29 from time t = (n-1)Ts to t = nTs are denoted as $Din_{n-1}$ and $Do_{n-1}$, respectively.

The current detection value of inductor 12 detected by A/D converter 221 at time t = nTs is denoted as $IL_n$, and the input-side duty value and the output-side duty value set by duty setter 29 from time t = nTs to t = (n+1)Ts are denoted as $Din_n$ and $Do_n$, respectively.

The current detection value of inductor 12 detected by A/D converter 221 at time t = (n+1)Ts is denoted as $IL_{n+1}$, and the input-side duty value and the output-side duty value set by duty setter 29 from time t = (n+1)Ts to t = (n+2)Ts are denoted as $Din_{n+1}$ and $Do_{n+1}$, respectively.

The current detection value of inductor 12 detected by A/D converter 221 at time t = (n+2)Ts is denoted as $IL_{n+2}$, and the input-side duty value and the output-side duty value set by duty setter 29 from time t = (n+2)Ts to t = (n+3)Ts are denoted as $Din_{n+2}$ and $Do_{n+2}$, respectively.

The current detection value of inductor 12 detected by A/D converter 221 at time t = (n+3)Ts is denoted as $IL_{n+3}$, and the input-side duty value and the output-side duty value set by duty setter 29 from time t = (n+3)Ts to t = (n+4)Ts are denoted as $Din_{n+3}$ and $Do_{n+3}$, respectively. The current detection value of inductor 12 detected by A/D converter 221 at time t = (n+4)Ts is denoted as $IL_{n+4}$.

Iref corresponds to target current value Iref output by voltage loop controller 24, and Imax and Imin correspond to current thresholds Imax and Imin output by threshold setter 26 based on target current value Iref. In the case illustrated in FIG. 5, target current value Iref and current thresholds Imax and Imin are switched to target current value Iref' (e.g., target current value Ibackup for drop recovery) and current thresholds Imax' and Imin' at time t = (n+1)Ts.

In the case illustrated in FIG. 5, mode switcher 28 outputs an operation mode signal indicating the transient response mode between time t = (n+1)Ts and time t = (n+3)Ts, and outputs an operation mode signal indicating the steady response mode during the other times. The transient response mode is a mode in which the current flowing through inductor 12 is changed with at least the first slope (a steeper slope than the second slope). In the transient response mode, the current flowing through inductor 12 may be changed by combining the first slope and the second slope that is more gradual than the first slope. In the case illustrated in FIG. 5, the current flowing through inductor 12 is changed by combining the first slope and the second slope between time t = (n+2)Ts and time t = (n+3)Ts in the transient response mode. The steady response mode is a mode in which the current flowing through inductor 12 is changed with the second slope. In both the transient response mode and the steady response mode, the current flowing through inductor 12 is changed with the third slope to decrease the current.

Duty setter 29 sets a duty value for the PWM signal provided to each of FETs 111, 114 so that the current value of inductor 12 is between current thresholds Imax and Imin or between current thresholds Imax' and Imin'. In the steady response mode, duty setter 29 sets the duty value so that the combination of the ON-OFF of FET 111 and the ON-OFF of FET 114 (hereinafter referred to also as a switching pattern) becomes the second combination in which the current of inductor 12 increases or decreases (for example, increases) most gradually. That is, in the steady response mode, duty setter 29 sets the duty value so that there is a time period during which FET 111 is ON and FET 114 is ON. In the transient response mode, duty setter 29 sets the duty value so that the switching pattern becomes the first combination in which the current of inductor 12 increases or decreases (for example, increases) most steeply. That is, in the transient response mode, duty setter 29 sets the duty value so that there is a time period during which FET 111 is ON and FET 114 is OFF.

However, just before the transition from the transient response mode to the steady response mode, duty setter 29 sets the duty value to combine with the switching pattern of the second combination, in which the current of inductor 12 increases or decreases most gradually, so that the current of inductor 12 is prevented from exceeding current threshold Imax' due to the switching pattern of the first combination, in which the current of inductor 12 is changed most steeply.

Threshold setter 26 calculates current thresholds Imax and Imin based on the assumption of the ripple waveform amplitudes (Iripple and Iripple' illustrated in FIG. 5) of the current of inductor 12 when the current detection value of inductor 12 becomes constant, that is, in the steady response mode. Specifically, threshold setter 26 determines current thresholds Imax and Imin so that interval Imax-Imin between the two current thresholds coincides with assumed Iripple and that intervals Imax-Iref and Iref-Imin between the two current thresholds and target current value Iref are equal. At this time, current thresholds Imax and Imin may be determined as in Equations (1) and (2) below. Note that the calculation method for Iripple will be described later.

$$Imax = Iref + Iripple/2 \quad (1)$$

$$Imin = Iref - Iripple/2 \quad (2)$$

Hereinafter, the details of the duty setting method performed by threshold setter 26 and duty setter 29 in current loop control will be described with reference to FIGS. 6 to 9.

FIGS. 6 to 9 are timing charts illustrating first to fourth examples of the duty cycle setting method for PWM signals in the embodiment.

FIGS. 6 to 9 illustrate cases where the input-side PWM signal is switched from ON to OFF in one period (when Din > 0) and the output-side PWM signal is switched from OFF to ON in one period (when Do > 0). Note that the order of ON-OFF switching within one period shown in each of the first to fourth examples is only an example and does not restrict the order of switching between ON and OFF for the input-side PWM signal and the output-side PWM signal. Moreover, matching between the phases of the input-side PWM signal and the output-side PWM signal is not necessarily required.

In each of the operation examples illustrated in FIGS. 6 to 9, control circuit 2 detects current IL (hereinafter referred to as $IL_n$) of inductor 12 at time t = nTs, and determines the duty values (hereafter referred to as $Din_{n+1}$ and $Do_{n+1}$,

respectively) of the input-side and output-side PWM signals between time t = (n+1)Ts and t = (n+2)Ts. This is because it is practically impossible for control circuit 2 to calculate and set duty values $Din_n$ and $Do_n$ between time t = nTs and t = (n+1)Ts at the moment when control circuit 2 detects $IL_n$ at time t = nTs. Note that $Din_n$ and $Do_n$ have already been set between time t = (n-1)Ts and t = nTs.

In each of the operation examples illustrated in FIGS. 6 to 9, the period between time t = (n-1)Ts and time t = nTs is an (n-1)-th period, the period between time t = nTs and time t = (n+1)Ts is an n-th period, the period between time t = (n+1)Ts and time t = (n+2)Ts is an (n+1)-th period, and the period between time t = (n+2)Ts and time t = (n+3)Ts is an (n+2)-th period.

In each of the operation examples illustrated in FIGS. 6 to 9, current IL of inductor 12 increases or decreases at a constant rate in accordance with voltage Vin of power supply 4 and voltage Vo of load 5. However, it is assumed that voltage Vin of power supply 4 and voltage Vo of load 5 change sufficiently gradually relative to current IL of inductor 12 and remain constant in the figure.

In each of the operation examples illustrated in FIGS. 6 to 9, current thresholds Imax and Imin output by threshold setter 26 are set based on input voltage value Vin detected by A/D converter 222, output voltage value Vo detected by A/D converter 223, and target current value Iref output by voltage loop controller 24. When drop detector 25 outputs a drop detection signal as described above, target current value Ibackup for drop recovery is used instead of target current value Iref.

As the first example of the duty cycle setting method, FIG. 6 illustrates an operation in a case where mode switcher 28 outputs an operation mode signal indicating the steady response mode. However, FIG. 6 illustrates an example where voltage Vin of power supply 4 and voltage Vo of load 5 satisfy the relationship Vin > Vo > 0.

In the steady response mode, duty setter 29 sets input-side duty value Din and output-side duty value Do so that current IL of inductor 12 is increased or decreased by the switching pattern of the second combination in which the absolute value of the current increase/decrease rate is the lowest, that is, the increase or decrease is most gradual. When Vin > Vo > 0, the switching pattern that increases the current of inductor 12 most gradually is a pattern in which FET 111 is ON and FET 114 is ON, and the current increase rate is dIL/dt = (Vin - Vo)/L. The switching pattern that decreases the current of inductor 12 gradually is a pattern in which FET 111 is OFF and FET 114 is ON, and the current increase rate is dIL/dt = -Vo/L. In the first example illustrated in FIG. 6, FET 114 is always ON, that is, output-side duty value Do is always set to 1.

In the case of the switching pattern illustrated in FIG. 6, detection value $IL_{n+2}$ of the current of inductor 12 at time t = (n+2)Ts, which is the start time point of the (n+2)-th period, can be predicted by Equation (3) below at time t = nTs, which is the start time point of the n-th period.

$$IL_{n+2} = IL_n + Vin \times Ts \times Din_{n+1}/L + Vin \times Ts \times Din_n/L - 2 \times Vo \times Ts/L \qquad (3)$$

Input-side duty value $Din_{n+1}$ is set so that $IL_{n+2}$ matches current threshold Imin (predetermined current value). $Din_{n+1}$ in the (n+1)-th period output by duty setter 29, where $IL_{n+2}$ matches Imin, can be calculated as in Equation (4) below using the prediction equation (3).

$$Din_{n+1} = L \times (Imin - IL_n)/(Ts \times Vin) - Din_{n+2} \times Vo/Vin \qquad (4)$$

Note that calculating and setting $Din_{n+1}$ so that $IL_{n+2}$ matches Imin is an example of the operation of duty setter 29. For example, when Vo > Vin > 0, Din is always set to 1 and $Do_{n+1}$ can be calculated and set in the same manner. When the orders of ON-OFF switching of the input-side and output-side PWM signals are reversed, the peaks and valleys of the waveforms are also reversed. Therefore, in this case, $IL_{n+2}$ needs to be matched with Imax instead of Imin.

By extending Equations (3) and (4) in the future direction, the value of $Din_{n+1}$ to $Din_n + m - 1$ can be calculated and set so that, for example, $IL_{n+m}$ (m is an integer of 3 or more) matches Imin.

Prior to the operation of duty setter 29, threshold setter 26 sets current thresholds Imax and Imin based on amplitude Iripple of the ripple waveform of the current of inductor 12, as in Equations (1) and (2), assuming the operation in the steady response mode. When Vin > Vo > 0, in a case where duty setter 29 increases and decreases the current of inductor 12 most gradually, that is, increases the current at current increase rate dIL/dt = (Vin - Vo)/L for only time $Din_n \times Ts$ and decreases the current at current increase rate dIL/dt = -Vo/L for only time $(1-Din_n) \times Ts$, input-side duty value $Din_n$ is set to Vo/Vin, and output-side duty value $Do_n$ is set to 1. Ripple width Iripple of the current of inductor 12 at this time can be calculated as in Equation (5) below.

$$Iripple = (Vin - Vo) \times Vo \times Ts/(L \times Vin) \qquad (5)$$

In the case of Vo > Vin > 0, Iripple can be calculated by replacing Vin and Vo with each other in Equation (5).

As the second example of the duty cycle setting method, FIG. 7 illustrates an operation in a case where the difference between $IL_n$ and the current threshold changes significantly due to, for example, instantaneous switching of the target current value to Iref', which is sufficiently distant from Iref, and the operation mode signal output by mode switcher 28 shifts from the steady response mode to the transient response mode. However, FIG. 7 illustrates a case where $IL_{n+2}$ does not reach Imin' even when the current of inductor 12 is increased to the maximum. Note that FIG. 7 illustrates, as an example, a case where voltage Vin of power supply 4 and voltage Vo of load 5 satisfy the relationship Vin > Vo > 0.

In the transient response mode, duty setter 29 sets input-side duty value Din and output-side duty value Do so that current IL of inductor 12 is increased or decreased by the switching pattern of the first combination in which the absolute value of the current increase/decrease rate is the highest, that is, the increase or decrease is the steepest. When Vin > Vo > 0, the switching pattern that steeply increases the current of inductor 12 is a pattern in which FET 111 is ON and FET 114 is OFF, and the current increase rate is dIL/dt = Vin/L. The switching pattern that decreases the current of inductor 12 is a pattern in which FET 111 is OFF and FET 114 is ON, and the current increase rate is dIL/dt = -Vo/L. At this time, between time t = (n+1)Ts and t = (n+2)Ts, the ON and OFF of FET 114 are the reverse of those of FET 111, and output-side duty value $Do_{n+1}$ is determined as $Do_{n+1} = 1 - Din_{n+1}$ using input-side duty value $Din_{n+1}$.

In the case of the switching pattern illustrated in FIG. 7, detected value $IL_{n+2}$ of the current of inductor 12 at time t = (n+2)Ts, which is the start time point of the (n+2)-th period, can be predicted by Equation (6) below at time t = nTs, which is the start time point of the n-th period.

$$IL_{n+2} = IL_{n+1} + (Vin + Vo) \times Ts \times Din_{n+1}/L - Vo \times Ts/L \quad (6)$$

However, $IL_{n+1}$ in the prediction equation (6) is a value appropriately predicted from the values of $IL_n$, $Din_n$, and $Do_n$ based on the relationship between the switching pattern and the current increase rate.

Input-side duty value $Din_{n+1}$ and output-side duty value $Do_{n+1}$ are set so that $IL_{n+2}$ matches current threshold Imin (predetermined current value). $Din_{n+1}$ in the (n+1)-th period output by duty setter 29, where $IL_{n+2}$ matches Imin, can be calculated as in Equation (7) below using the prediction equation (6).

$$Din_{n+1} = L \times (Imin - IL_{n+1})/(Ts \times (Vin + Vo)) + Vo/(Vin + Vo) \quad (7)$$

However, in the case illustrated in FIG. 7, $IL_{n+2}$ does not reach Imin even when input-side duty value $Din_{n+1}$ is set to the maximum value of 1 and the current of inductor 12 is increased to the maximum. In this case, input-side duty value $Din_{n+1}$ is set to 1 and output-side duty value $Do_{n+1}$ is set to 0.

FIG. 8 illustrates, as the third example of the duty setting method, an operation in a case where $IL_{n+2}$ is expected to exceed Imin when the current of inductor 12 is increased to the maximum during operation in the transient response mode. However, FIG. 8 illustrates, as an example, a case where voltage Vin of power supply 4 and voltage Vo of load 5 satisfy the relationship Vin > Vo > 0.

At this time, input-side duty value $Din_{n+1}$ and output-side duty value $Do_{n+1}$ can be calculated and set according to Equation (4) and the relationship $Do_{n+1} = 1 - Din_{n+1}$.

The peak value of current IL of inductor 12 from times t = (n+1)Ts to t = (n+2)Ts is defined as Ipeak. Ipeak in the case illustrated in FIG. 8 can be predicted based on input-side duty value $Din_{n+1}$ already calculated by duty setter 29, as in Equation (8) below.

$$Ipeak = IL_{n+1} + Vin \times Ts \times Din_{n+1}/L \quad (8)$$

FIG. 9 illustrates a duty setting method when Ipeak predicted by Equation (8) exceeds Imax due to operation in the transient response mode based on Equation (7). However, FIG. 9 illustrates, as an example, a case where voltage Vin of power supply 4 and voltage Vo of load 5 satisfy the relationship Vin > Vo > 0.

Duty setter 29 prevents Ipeak from exceeding Imax by combining the switching pattern of the first combination in which the current of inductor 12 is changed steeply in one period with the switching pattern of the second combination in which the current is changed gradually. In the operation of the fourth example of the duty cycle setting method illustrated in FIG. 9, the time when FET 111 is ON and FET 114 is ON is provided between the time when FET 111 is ON and FET 114 is OFF and the time when FET 111 is OFF and FET 114 is ON.

Ipeak in the case illustrated in FIG. 9 can be predicted as in Equation (9) below.

Ipeak = $IL_{n+1}$ + (Vin - Vo) $\times$ Ts $\times$ $Din_{n+1}$/L - Vo $\times$ Ts $\times$ (1 - $Din_{n+1}$)/L                    (9)

The detected value $IL_{n+2}$ of the current of inductor 12 at time t = (n+2)Ts, which is the start time point of the (n+2)-th period, can be predicted by Equation (10) below at time t = nTs, which is the start time point of the n-th period.

$$IL_{n+2} = Ipeak - Vo \times Ts \times (1 - Din_{n+1})/L \quad (10)$$

Input-side duty value $Din_{n+1}$ and output-side duty value $Do_{n+1}$ are set so that Ipeak matches Imax and the $IL_{n+2}$ matches Imin. Such $Din_{n+1}$ and $Do_{n+1}$ can be calculated based on Equations (9) and (10) and on Equations (1), (2) and (5) for threshold and ripple width, as in Equations (11) and (12).

$$Din_{n+1} = Vo/Vin \quad (11)$$

$$Do_{n+1} = (IL_{n+1} - Imax) \times L/(Vo \times Ts) - 2 - Vo/Vin \quad (12)$$

As shown in the first to fourth examples , duty setter 29 may set the respective duty cycles for FETs 111, 114 by selecting the ON-OFF combination of FETs 111, 114 from the first combination in which the current flowing through inductor 12 changes with the first slope, and the second combination in which the current flowing through inductor 12 changes with the second slope that is more gradual than the first slope, so that the current flowing through inductor 12 becomes a predetermined current value (e.g., current threshold Imin).

For example, in the n-th period (n is an integer) among repeated switching periods of FETs 111, 114, duty setter 29 may set the duty cycle for each of FETs 111, 114 for the (n+1)-th period to an (n+x-1)-th period (x is an integer greater than or equal to 2) by selecting the ON-OFF combination of FETs 111, 114 from the first combination and the second combination so that the current flowing in inductor 12 in an (n+x)-th period becomes the predetermined current value. For example, when x is 2, in the n-th period (n is an integer) among repeated switching periods of FETs 111, 114, duty setter 29 may set the duty cycle for each of FETs 111, 114 for the (n+1)-th period to the (n+x-1)-th period (x is an integer greater than or equal to 2) by selecting the ON-OFF combination of FETs 111, 114 from the first combination and the second combination so that the current flowing in inductor 12 in the (n+x)-th period becomes the predetermined current value.

In Example 4, duty setter 29 sets the duty cycle for each of FETs 111, 114 so that the ON-OFF combination of FETs 111, 114 becomes the first combination and then becomes the second combination. This is because the current flowing through inductor 12 may exceed current threshold Imax within one switching period if the current is continuously changed only with the steep slope of the first combination within one switching period. Therefore, in such a case, the current is first changed steeply by the first combination, and then, the current is changed gradually by the second combination.

As described above, when the difference between current threshold Imin and current detection value IL is greater than or equal to a predetermined value, control circuit 2 operates converter 1 using the switching pattern of the first combination in which the current of inductor 12 is changed most steeply as the transient response mode. When the difference between current threshold Imin and current detection value IL is less than the predetermined value, control circuit 2 operates converter 1 using the switching pattern of the second combination in which the current of inductor 12 is changed most gradually as the steady response mode. This enables implementation of both rapid approach of the current value of inductor 12 to distant target value Iref and subsequent accurate following of the current value of inductor 12 to target value Iref.

When the voltage of load 5 falls below the drop criterion voltage, control circuit 2 switches the calculation reference value for current thresholds Imax and Imin from target current value Iref output by voltage loop controller 24 to target current value Ibackup for drop recovery. Thus, even if, for example, voltage loop controller 24 is designed with an emphasis on stability, and target current value Iref, which is output, changes excessively gradually, it is possible to allow the current of inductor 12 to flow immediately in a sufficient amount for fast recovery from the voltage drop.

(Other Embodiments)

As described above, the embodiment has been described as an example of the technique according to the present disclosure. However, the technique according to the present disclosure is not limited thereto and can be applied appropriately to an embodiment that has been modified, replaced, added, or omitted. For example, the following modifications are also included in one embodiment of the present disclosure.

For example, in the above embodiment, converter 1 has been shown as an example of the circuit controlled by control circuit 2, but the circuit controlled by control circuit 2 is not limited to converter 1 as long as the circuit includes at least two switching elements.

For example, in the above embodiment, the first combination, in which the current flowing in the circuit changes with the first slope, and the second combination, in which the current flowing in the circuit changes with the second slope that is more gradual than the first slope, have been described as the ON-OFF combinations of at least two switching elements. However, there may be an additional combination other than the first combination and the second combination. For example, in addition to the first combination and the second combination, there may be one or more combinations in which the current flowing in the circuit changes with a slope more gradual than the first slope and with a slope steeper than the second slope. If there is additional combination other than the first combination and the second combination as the ON-OFF combination of at least two switching elements, the first slope due to the first combination will be the steepest slope of the slopes due to the respective combinations and the second slope due to the second combination will be the most gradual slope of the slopes due to the respective combinations.

For example, in the above embodiment, an example has been described where, when drop detector 25 detects a drop, threshold setter 26 sets two current thresholds Imax and Imin using, as a reference, a voltage recovery current value prepared in advance instead of the target current value. However, the present disclosure is not limited thereto. For example, various target current values may be prepared in advance depending on the state of load 5, and threshold setter 26 may set two current thresholds using the target current value corresponding to the state of load 5 as a reference. For example, when load 5 changes to a state that requires a large current, threshold setter 26 may set two current thresholds using a target current value corresponding to the state as a reference.

For example, in the above embodiment, an example where control circuit 2 includes drop detector 25, threshold setter 26, and mode switcher 28 has been described. However, control circuit 2 may not include drop detector 25, threshold setter 26, or mode switcher 28.

For example, the present disclosure can be implemented not only as control circuit 2, but also as a power conversion device including converter 1 and control circuit 2.

For example, the present disclosure can be implemented not only as control circuit 2, but also as a control method of control circuit 2 that includes steps (processes) performed by components constituting control circuit 2.

The control method is a method executed by control circuit 2 that controls a circuit including at least two switching elements. As illustrated in FIG. 2, the method includes: a duty setting step (S17) of setting a duty cycle for each of at least two switching elements by selecting an ON-OFF combination of at least two switching elements from a first combination in which a current flowing in the circuit changes with a first slope, and a second combination in which the current flowing in the circuit changes with a second slope that is more gradual than the first slope, so that the current flowing in the circuit becomes a predetermined current value; and an output step (S19) of outputting signals corresponding to the set duty cycles.

For example, the steps in the control method may be executed by a computer (computer system). The present disclosure can be implemented as a program for causing the computer to execute the steps included in the control method.

Furthermore, the present disclosure can be implemented as a non-temporary computer-readable recording medium such as a CD-ROM recording the program.

For example, when the present disclosure is implemented by a program (software), each step is executed by executing the program using hardware resources such as a computer central processing unit (CPU), memory, and input/output circuits. That is, each step is executed by the CPU acquiring data from memory, input/output circuit, or the like and performing arithmetic operations or outputting arithmetic results to memory, input/output circuit, or the like.

Each component included in control circuit 2 of the above embodiment may be implemented as a dedicated circuit or a general-purpose circuit.

Each component included in control circuit 2 of the above embodiment may be implemented as a large-scale integrated circuit (LSI), which is an integrated circuit (IC).

The integrated circuit is not limited to an LSI, but may be implemented as a dedicated circuit or a general-purpose processor. A field-programmable gate array (FPGA), which allows programming, or a reconfigurable processor, which can reconfigure the connections and settings of circuit cells in the LSI, may be used.

Moreover, if an integrated circuit technology that replaces the LSI emerges as a result of advances in semiconductor technology or another derived technology, the technology may be used to create an integrated circuit for each component included in control circuit 2.

In addition, the present disclosure also includes forms obtained by applying various modifications that a person skilled in the art can conceive to the embodiment, as well as forms implemented by arbitrarily combining components and functions in the embodiment within a scope not departing from the gist of the present disclosure.

(Note)

According to the description of the above embodiments, the following techniques are disclosed.

(Technique 1)

A control circuit for controlling a circuit that includes at least two switching elements, the control circuit including: a duty setter that sets a duty cycle for each of the at least two switching elements by selecting an ON-OFF combination of the at least two switching elements from a first combination in which a current flowing in the circuit changes with a first slope, and a second combination in which the current flowing in the circuit changes with a second slope that is more gradual than the first slope, to cause the current flowing in the circuit to become a predetermined current value; and an outputter that outputs signals corresponding to the duty cycles that have been set.

With this configuration, since the duty cycle for each of at least two switching elements can be set so that the current is changed with two types of slopes, namely, a steep slope and a gradual slope, the current can be controlled at high speed by changing the current with the steep slope. Further, the current can be controlled with high accuracy by combining the two types of slopes to change the current. Therefore, current control can be performed at high speed and with high accuracy.

(Technique 2)

The control circuit according to technique 1, wherein in an n-th period, where n is an integer, among repeated switching periods of the at least two switching elements, the duty setter sets the duty cycle for each of the at least two switching elements for an (n+1)-th period to an (n+x-1)-th period, where x is an integer greater than or equal to 2, by selecting the ON-OFF combination of the at least two switching elements from the first combination and the second combination to cause the current flowing in the circuit in an (n+x)-th period to become the predetermined current value.

With this configuration, since the duty cycle for each of at least two switching elements for the (n+1)-th period to the (n+x-1)-th period is set in the n-th period to control the current flowing in the circuit in the (n+x)-th period, there is sufficient allowance for processing time, and current control can be performed with higher accuracy.

(Technique 3)

The control circuit according to technique 2, wherein in the n-th period among repeated switching periods of the at least two switching elements, the duty setter sets the duty cycle for each of the at least two switching elements for the (n+1)-th period by selecting the ON-OFF combination of the at least two switching elements from the first combination and the second combination to cause the current flowing in the circuit in an (n+2)-th period to become the predetermined current value.

With this configuration, since the duty cycle for each of at least two switching elements for the (n+1)-th period is set in the n-th period to control the current flowing in the circuit in the (n+2)-th period, there is sufficient allowance for processing time, and current control can be performed with higher accuracy.

(Technique 4)

The control circuit according to any one of techniques 1 to 3, further including: a threshold setter that sets two current thresholds, wherein the predetermined current value is one of the two current thresholds.

With this configuration, current control can be performed at high speed and with high accuracy so that the current flowing in the circuit is one of the two current thresholds (e.g., the maximum and minimum current values of the current ripple width).

(Technique 5)

The control circuit according to technique 4, wherein the threshold setter sets each of the two current thresholds using a target current value of the current flowing in the circuit as a reference, the target current value having been determined based on a supply voltage from the circuit to a load.

With this configuration, the two current thresholds can be set using the target current value determined so that the supply voltage to the load becomes the target voltage. For example, the maximum current value and the minimum current value can be set so that the target current value becomes the median value.

(Technique 6)

The control circuit according to technique 5, further including: a drop detector that detects a drop in the supply voltage, wherein when the drop detector detects the drop, the threshold setter sets each of the two current thresholds using, as a reference, a voltage recovery current value prepared in advance instead of the target current value.

With this configuration, when a drop in the supply voltage is detected, the two current thresholds can be quickly set using, as a reference, a voltage recovery current value prepared in advance, and the current flowing in the circuit can be changed to the predetermined current value, which is one of the two current thresholds at high speed, thereby enabling faster recovery from the voltage drop.

(Technique 7)

The control circuit according to any one of techniques 1 to 6, wherein the duty setter sets the duty cycle for each of the at least two switching elements to cause the ON-OFF combination of the at least two switching elements to become the second combination after the ON-OFF combination becomes the first combination.

If the current is continuously changed only with the steep slope of the first combination within one switching period, the current flowing in the circuit may exceed the maximum current value or the minimum current value of the ripple width within one switching period. Therefore, in such a case, the current is first changed steeply by the first combination, and then, the current is changed gradually by the second combination. Thus, the current flowing in the circuit can be changed to the predetermined current value at high speed while preventing the current flowing in the circuit from exceeding the maximum current value or the minimum current value of the ripple width within one switching period.

(Technique 8)

The control circuit according to any one of techniques 1 to 7, further including: a mode switcher that switches between a transient response mode in which the current flowing in the circuit is changed with at least the first slope and a steady response mode in which the current flowing in the circuit is changed with the second slope, based on the current flowing in the circuit and the predetermined current value.

With this configuration, when the difference between the current flowing in the circuit and the predetermined current value is large, the transient response mode is used to enable the current flowing in the circuit to change to the predetermined current value at high speed. On the other hand, when the difference between the current flowing in the circuit and the predetermined current value is small, since there is little need to change the current flowing in the circuit at high speed, the steady response mode is used to enable the current flowing in the circuit to change to the predetermined current value gradually.

(Technique 9)

The control circuit according to any one of techniques 1 to 7, wherein the circuit is a circuit provided in a power conversion device, and the current flowing in the circuit is a current flowing through an inductor used for power conversion.

With this configuration, current control for the current flowing through the inductor in the power conversion device can be performed at high speed and with high accuracy.

(Technique 10)

A power conversion device including: the control circuit according to any one of techniques 1 to 9; and the circuit.

This makes it possible to provide a power conversion device capable of performing current control at high speed and with high accuracy.

(Technique 11)

A control method executed by a control circuit that controls a circuit including at least two switching elements, the control method including: setting a duty cycle for each of the at least two switching elements by selecting an ON-OFF combination of the at least two switching elements from a first combination in which a current flowing in the circuit changes with a first slope, and a second combination in which the current flowing in the circuit changes with a second slope that is more gradual than the first slope, to cause the current flowing in the circuit to become a predetermined current value; and outputting signals corresponding to the duty cycles that have been set.

This makes it possible to provide a control method capable of performing current control at high speed and with high accuracy.

(Technique 12)

A program for causing a computer to execute the control method according to technique 11.

This makes it possible to provide a program capable of performing current control at high speed and with high accuracy.

[Industrial Applicability]

The present disclosure is applicable to a power conversion device and the like.

[Reference Signs List]

| | |
|---|---|
| 1 | converter |
| 2 | control circuit |
| 4 | power supply |
| 5 | load |
| 12 | inductor |
| 13 | smooth capacitor |
| 14 | current sensor |
| 15 | drive circuit |
| 21 | timer counter |
| 23, 27 | subtractor |
| 24 | voltage loop controller |
| 25 | drop detector |
| 26 | threshold setter |
| 28 | mode switcher |
| 29 | duty setter |
| 30 | outputter |
| 111, 112, 113, 114 | FET |
| 221, 222, 223 | A/D converter |

**Claims**

1. A control circuit for controlling a circuit that includes at least two switching elements, the control circuit comprising:

   a duty setter that sets a duty cycle for each of the at least two switching elements by selecting an ON-OFF combination of the at least two switching elements from a first combination in which a current flowing in the circuit changes with a first slope, and a second combination in which the current flowing in the circuit changes with a second slope that is more gradual than the first slope, to cause the current flowing in the circuit to become a predetermined current value; and
   an outputter that outputs signals corresponding to the duty cycles that have been set.

2. The control circuit according to claim 1,
   wherein in an n-th period, where n is an integer, among repeated switching periods of the at least two switching elements, the duty setter sets the duty cycle for each of the at least two switching elements for an (n+1)-th period to an (n+x-1)-th period, where x is an integer greater than or equal to 2, by selecting the ON-OFF combination of the at least two switching elements from the first combination and the second combination to cause the current flowing in the circuit in an (n+x)-th period to become the predetermined current value.

3. The control circuit according to claim 2,
   wherein in the n-th period among repeated switching periods of the at least two switching elements, the duty setter sets the duty cycle for each of the at least two switching elements for the (n+1)-th period by selecting the ON-OFF combination of the at least two switching elements from the first combination and the second combination to cause the current flowing in the circuit in an (n+2)-th period to become the predetermined current value.

4. The control circuit according to any one of claims 1 to 3, further comprising:

   a threshold setter that sets two current thresholds,
   wherein the predetermined current value is one of the two current thresholds.

5. The control circuit according to claim 4,
   wherein the threshold setter sets each of the two current thresholds using a target current value of the current flowing in the circuit as a reference, the target current value having been determined based on a supply voltage from the circuit to a load.

6. The control circuit according to claim 5, further comprising:

a drop detector that detects a drop in the supply voltage,
wherein when the drop detector detects the drop, the threshold setter sets each of the two current thresholds using, as a reference, a voltage recovery current value prepared in advance instead of the target current value.

7.  The control circuit according to any one of claims 1 to 3,
wherein the duty setter sets the duty cycle for each of the at least two switching elements to cause the ON-OFF combination of the at least two switching elements to become the second combination after the ON-OFF combination becomes the first combination.

8.  The control circuit according to any one of claims 1 to 3, further comprising:
a mode switcher that switches between a transient response mode in which the current flowing in the circuit is changed with at least the first slope and a steady response mode in which the current flowing in the circuit is changed with the second slope, based on the current flowing in the circuit and the predetermined current value.

9.  The control circuit according to any one of claims 1 to 3,

wherein the circuit is a circuit provided in a power conversion device, and
the current flowing in the circuit is a current flowing through an inductor used for power conversion.

10. A power conversion device comprising:

the control circuit according to any one of claims 1 to 3; and
the circuit.

11. A control method executed by a control circuit that controls a circuit including at least two switching elements, the control method comprising:

setting a duty cycle for each of the at least two switching elements by selecting an ON-OFF combination of the at least two switching elements from a first combination in which a current flowing in the circuit changes with a first slope, and a second combination in which the current flowing in the circuit changes with a second slope that is more gradual than the first slope, to cause the current flowing in the circuit to become a predetermined current value; and
outputting signals corresponding to the duty cycles that have been set.

12. A program for causing a computer to execute the control method according to claim 11.

FIG. 1

# FIG. 2

Start

S11

Detect inductor current, input voltage, and output voltage

S12

Is drop criterion satisfied? — No

Yes — S13

Set Ibackup as threshold setting reference

S14

Set Iref as threshold setting reference

Set threshold — S15

S16

Difference between inductor current and threshold ≥ predetermined value? — No

Yes — S17

Determine Din, Do in transient response mode

S18

Determine Din, Do in steady response mode

Set Din, Do in outputter — S19

S20

Timer counter compare-match? — No

Yes — S21

Reset timer counter

End

# FIG. 3

EP 4 637 013 A1

# FIG. 4

| FET 111 | FET 114 | dIL/dt |
|---------|---------|-----------|
| ON | ON | (Vin-Vo)/L |
| ON | OFF | Vin/L |
| OFF | ON | -Vo/L |

FIG. 5

# FIG. 6

# FIG. 7

# FIG. 8

# FIG. 9

## INTERNATIONAL SEARCH REPORT

| International application No. |
| --- |
| **PCT/JP2023/032833** |

| A. | CLASSIFICATION OF SUBJECT MATTER |
| --- | --- |

*H02M 3/155*(2006.01)i
FI:   H02M3/155 H

According to International Patent Classification (IPC) or to both national classification and IPC

| B. | FIELDS SEARCHED |
| --- | --- |

Minimum documentation searched (classification system followed by classification symbols)

H02M3/155

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2010-200517 A (FUJITSU SEMICONDUCTOR LTD) 09 September 2010 (2010-09-09) entire text, all drawings | 1-12 |
| A | JP 2010-148349 A (STMICROELECTRONICS SRL) 01 July 2010 (2010-07-01) entire text, all drawings | 1-12 |
| A | US 2005/0168198 A1 (MAKSIMOVIC, Dragan) 04 August 2005 (2005-08-04) entire text, all drawings | 1-12 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 November 2023** | **21 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032833**

| Patent document cited in search report | | | Publication date (day/month/year) | Patent family member(s) | | | Publication date (day/month/year) |
|---|---|---|---|---|---|---|---|
| JP | 2010-200517 | A | 09 September 2010 | (Family: none) | | | |
| JP | 2010-148349 | A | 01 July 2010 | US | 2010/0157635 | A1 | |
| | | | | EP | 2200163 | A1 | |
| | | | | EP | 2400642 | A1 | |
| US | 2005/0168198 | A1 | 04 August 2005 | (Family: none) | | | |

Form PCT/ISA/210 (patent family annex) (January 2015)

**EP 4 637 013 A1**

**REFERENCES CITED IN THE DESCRIPTION**

**Patent documents cited in the description**

- JP 2019075855 A
- US 7148669 B